Europäisches Patentamt

European Patent Office

Office européen des brevets

(11) Veröffentlichungsnummer: **0 504 762 A1**

## (12) EUROPÄISCHE PATENTANMELDUNG

(21) Anmeldenummer: **92104428.5**

(22) Anmeldetag: **14.03.92**

(51) Int. Cl.⁵: **A01G 31/00**

(30) Priorität: **16.03.91 DE 4108675**
**13.09.91 DE 4130468**

(43) Veröffentlichungstag der Anmeldung:
**23.09.92 Patentblatt 92/39**

(84) Benannte Vertragsstaaten:
**AT BE CH DE DK ES FR GB IT LI LU NL**

(71) Anmelder: **ASB GRÜNLAND HELMUT AURENZ GmbH & CO**
**Porschestrasse 4**
**W-7140 Ludwigsburg(DE)**

(72) Erfinder: **Aurenz,Helmut**
**Porschestrasse 4**
**W-7140 Ludwigsburg(DE)**

(74) Vertreter: **Hoeger, Stellrecht & Partner**
**Uhlandstrasse 14 c**
**W-7000 Stuttgart 1(DE)**

(54) **Kulturriegel.**

(57) Um einen Kulturriegel für im wesentlichen erdlose Hydrokulturen, umfassend ein in einer Umhüllung abgepacktes Substrat, zur Verfügung zu stellen, welcher einerseits die Möglichkeit schafft, diese Hydrokulturen in gleicher Weise zu betreiben wie mit den bislang bekannten Substraten, andererseits aber umweltfreundlich entsorgbar ist, wird vorgeschlagen, daß das Substrat ein Basismaterial aufweist und daß das Basismaterial durch mechanisches Zerkleinern hergestellte unvertorfte Pflanzenfasern umfaßt, welche auf ihrer Faseroberfläche mit einer pflanzenwachstumsverbessernden Substanz versehen sind.

Fig. 1

EP 0 504 762 A1

Die Erfindung betrifft einen Kulturriegel für im wesentlichen erdlose Hydrokulturen, umfassend ein in einer Umhüllung abgepacktes Substrat.

Es ist bekannt, als Substrate für erdlose Kulturverfahren beispielsweise Steinwolle, Blähton, PU-Schaum und ähnliche Materialien zu verwenden, wie beispielsweise in der Zeitschrift "Deutscher Gartenbau" 20/1990, Seiten 1354 bis 1355 oder 38/1990, Seiten 2467 bis 2469 oder 48/1990, Seiten 3067 bis 3071 beschrieben.

Diese Materialien haben den Nachteil, daß sie nach ihrer Verwendung nicht umweltfreundlich entsorgbar sind.

Der Erfindung liegt daher ferner die Aufgabe zugrunde, einen Kulturriegel für Hydrokulturen zur Verfügung zu stellen, welcher einerseits die Möglichkeit schafft, diese Hydrokulturen in gleicher Weise zu betreiben wie mit den bislang bekannten Substraten, andererseits aber umweltfreundlich entsorgbar ist.

Diese Aufgabe wird bei einem Kulturriegel der eingangs beschriebenen Art erfindungsgemäß dadurch gelöst, daß das Substrat ein Basismaterial aufweist und daß das Basismaterial durch mechanisches Zerkleinern hergestellte unvertorfte Pflanzenfasern umfaßt, welche auf ihrer Faseroberfläche mit einer pflanzenwachstumsverbessernden Substanz versehen sind.

Der Vorteil der erfindungsgemäßen Lösung ist darin zu sehen, daß ein Kulturriegel mit einem derartigen Substrat gar nicht entsorgt werden muß, sondern daß dieses Substrat nach Verwendung in der Hydrokultur kompostierbar ist oder bei Erdkulturen als Bodenverbesserungsmittel oder Pflanzsubstrat alleine oder in Vermischung mit Erde Verwendung finden kann.

Insbesondere vorteilhaft bei der erfindungsgemäßen Lösung ist, daß das Substrat nach der Verwendung in den Hydrokulturen mit Nährstoffen angereichert ist und somit zur Bodenverbesserung oder sogar als Düngemittel in konventionellen Kulturen, seien es Freiland oder Gewächshauskulturen einsetzbar ist.

Eine weitere Möglichkeit besteht auch darin, dieses Substrat ganz allgemein als Kultursubstrat für weitere konventionelle Kulturen zu verwenden.

Vorzugsweise sind die Kulturriegel blockförmig oder schlauchförmig ausgebildet, so daß sie vorzugsweise in vorhandene Vorrichtungen für Hydrokulturen, beispielsweise Rinnen einsetzbar sind.

Es ist dabei auch denkbar, die Kulturriegel derart auszubilden, daß sie beispielsweise in andere Gefäße, wie Blumenkästen oder zylindrische Gefäße einsetzbar sind.

Generell sind die erfindungsgemäßen Kulturriegel so ausgebildet, daß sie in ein Kulturgefäß für die Hydrokultur passend einsetzbar sind, wobei die Umhüllung die Formstabilität derartiger Kulturriegel gewährleistet.

Der Vorteil des erfindungsgemäßen Basismaterials ist darin zu sehen, daß alle Arten von Pflanzenmaterialien mit hohem Zellulose- und Ligninanteil, insbesondere verholztes Pflanzenmaterial als Ausgangsmaterial verwendet werden können, wobei die für eine Verwendung im Pflanzenkultursubstrat erforderlichen Eigenschaften der Pflanzenfasern dadurch erreicht werden, daß die Pflanzenfasern auf ihrer Oberfläche mit pflanzenwachstumsverbessernden Substanzen versehen sind.

Besonders vorteilhaft ist es, wenn die mechanisch aufgefaserten Pflanzenfasern maschinell durch Einwirkung von Scherkräften bei einer Temperatur von mehr als 60°C hergestellt sind. Bei einer derartig hergestellten Pflanzenfaser ist die Gewähr gegeben, daß eine optimale Auffaserung des Ausgangsmaterials erfolgt und somit die für ein Pflanzenkultursubstrat gewünschte Faserstruktur des Basismaterials vorliegt.

Besonders vorteilhaft läßt sich ein derartiges Auffasern dann durchführen, wenn die maschinell aufgefaserten Pflanzenfasern durch Auffasern von Pflanzenmaterial in einer Extrudervorrichtung hergestellt sind, da die Extrudervorrichtung über Scherkräfte auf das Pflanzenmaterial einwirkt und außerdem aufgrund der Reibung und des Drucks eine Temperatur von mehr als 60° C entsteht, wodurch eine besonders vorteilhafte Faserstruktur entsteht.

Als besonders geeignetes Pflanzenmaterial für die Herstellung der Pflanzenfasern haben sich Rückstände aus holzverarbeitenden Betrieben, aus landwirtschaftlichen und Forstbetrieben, wie beispielsweise Baumrinde, Schwachholz, Äste, insbesondere auch Holzhackschnitzel, Stroh und Pflanzenstengel erwiesen.

Hinsichtlich der Art und Weise, die pflanzenwachstumsverbessernde Substanz auf die Oberfläche der Pflanzenfasern aufbringen, sind mehrere Vorgehensweisen denkbar. So ist eine vorteilhafte Vorgehensweise darin zu sehen, die pflanzenwachstumsverbessernde Substanz im Verlauf des mechanischen Auffaserns des Pflanzenmaterials auf die Oberfläche der Pflanzenfasern aufzubringen und dadurch gut auf den Pflanzenfasern zu fixieren.

Im Hinblick auf die Art der pflanzenwachstumsverbessernden Substanzen sind die unterschiedlichsten Möglichkeiten denkbar.

So sieht eine vorteilhafte Variante des erfindungsgemäßen Basismaterials vor, daß die pflanzenwachstumsverbessernde Substanz basisch wirkende und einen pflanzengerechten pH-Wert der Pflanzenfasern einstellende pflanzenverträgliche Substanzen, umfaßt.

Vorzugsweise können derartige Substanzen kohlensaurer Kalk, Dolomitkalk, Branntkalk, Kalilauge, Natronlauge, Silikatlösungen, wie Wasserglas, alkalisch wirkende Nährsalze und ähnliche Substanzen sein.

Dabei wird mit diesen basisch wirkenden Substanzen vorteilhafterweise ein pH-Wert des Basismaterials zwischen ungefähr 4 und ungefähr 6 eingestellt.

Bei einem weiteren Ausführungsbeispiel des erfindungsgemäßen Basismaterials umfaßt die pflanzenwachstumsverbessernde Substanz alternativ oder ergänzend zu den vorstehend genannten Substanzen die Pflanzenfasern gegen starken mikrobiellen Abbau schützende Substanzen. Dies ist von großem Vorteil, da die Pflanzenfasern in der Regel mikrobiell abbaubare Bestandteile enthalten und ein starker mikrobieller Abbau jedoch bei einem Pflanzenkultursubstrat unerwünscht ist.

Ausführungsbeispiele derartiger, einen starken mikrobiellen Abbau verhindernder Substanzen sind beispielsweise Silikate in fester oder flüssiger Form, wie hochdisperse Kieselsäure, Kunstharze, Pflanzenöle, Kohlenstäube insbesondere Braunkohle, Aschen, Schlacken, Ruß, fungizid oder bakterizid wirkende Substanzen, wobei es sich bei den letzteren um natürlich vorkommende oder chemisch synthetisierte Substanzen handeln kann.

Vorzugsweise sind die die Pflanzenfasern gegen starken mikrobiellen Abbau schützenden Substanzen die Pflanzenfasern mit einem Überzug versehende Substanzen, wobei dieser Überzug einen mikrobiellen Abbau verhindert.

Alternativ oder ergänzend zu den vorstehend genannten pflanzenwachstumsverbessernden Substanzen ist bei einem weiteren Ausführungsbeispiel des erfindungsgemäßen Basismaterial vorgesehen, daß die pflanzenwachstumsverbessernde Substanz die Ionenaustauschkapazität der Pflanzenfasern erhöhende Stoffe umfaßt. Dies ist deshalb besonders von großem Vorteil, da dadurch die chemischen Eigenschaften, insbesondere im Zusammenhang mit einer Düngung, des erfindungsgemäßen Basismaterials erheblich verbessert werden.

Beispiele derartiger die Ionenaustauschkapazität der Pflanzenfasern erhöhenden Stoffe sind beispielsweise montmorillonithaltige Tone, Zeolithe oder auch Kunstharze.

Ein weiteres vorteilhaftes Ausführungsbeispiel eines erfindungsgemäßen Basismaterials sieht als pflanzenwachstumsverbessernde Substanz alternativ oder ergänzend zu den vorstehend genannten Substanzen Pflanzennährstoffträger vor, die ebenfalls auf der Oberfläche der Pflanzenfasern aufgebracht sind.

Derartige Pflanzennährstoffträger können prinzipiell organische und/oder anorganische Substanzen umfassen.

Beispiele derartiger Pflanzennährstoffträger sind beispielsweise Ammoniumsalze, Nitrate, Phosphate, Kalisalze, synthetische organische Stickstoffverbindungen, wie Harnstoff, Formaldehydkondensate, wie Dicyandiamid, Crotonylidendiurea, oder natürliche Stickstoffverbindungen, wie Proteine, stickstoffhaltige Humusstoffe oder Pflanzennährstoffträger tierischer und pflanzlicher Herkunft, wie Gülle, Mist, Hornmehl, Knochenmehl, Guano.

Eine weitere vorteilhafte pflanzenwachstumsverbessernde Substanz sind Spurennährstoffträger, wie Magnesium, Eisen, Kupfer, Zink, Mangan, Molybdän als Salz, als Chelat oder als Metallmehl.

Schließlich sieht ein weiteres bevorzugtes Ausführungsbeispiel eines erfindungsgemäßen Basismaterials alternativ oder ergänzend zu den vorstehend genannten pflanzenwachstumsverbessernden Substanzen noch zusätzlich pflanzenwachstumsstimulierende Substanzen vor. Diese pflanzenwachstumsstimulierenden Substanzen wirken sich direkt auf die Wachstumsaktivität der Pflanze aus. Beispiele derartiger pflanzenwachstumsstimulierender Substanzen sind Huminsäuren in fester oder flüssiger Form, Algenmehl und Algenextrakte in fester oder flüssiger Form, Phytohormone, Vitamine und ähnliche Zugaben.

Als besonders vorteilhaft hat sich Leonardit-Schiefer-Mehl erwiesen, welches einen Huminsäuregehalt von ungefähr 75% aufweist, gleichzeitig den Pflanzenfasern eine braune Farbe verleiht und außerdem eine gute Pufferkraft aufweist sowie zusätzlich die Ionenaustauschfähigkeit verbessert.

Das Pflanzenwachstum kann ferner auch noch durch Zugabe von Substanzen verbessert werden, welche die Wasseraufnahmefähigkeit der Pflanzenfasern oder die Wiederbenetzbarkeit der Pflanzenfasern nach einem Austrocknen verbessern. Derartige Substanzen sind beispielsweise Tone, Tenside, vernetzte Polyacrylamide und ähnliche Substanzen.

Die erfindungsgemäße Aufgabe wird ferner durch ein Verfahren zur Herstellung eines Basismaterials für einen Kulturriegel gelöst, welches sich dadurch auszeichnet, daß durch mechanische Auffaserung von Pflanzenmaterial unvertorfte Pflanzenfasern hergestellt werden und daß diese Pflanzenfasern auf ihrer Oberfläche mit pflanzenwachstumsverbessernden Substanzen versehen werden.

Ein besonders vorteilhaftes Ausführungsbeispiel des erfindungsgemäßen Verfahrens sieht dabei vor, daß unvertorftes Pflanzenmaterial durch die Einwirkung von Scherkräften bei einer Temperatur von mehr als 60° C mechanisch zu Pflanzenfasern aufgefasert wird.

Besonders zweckmäßig ist es, wenn dieses Pflanzenmaterial in einer Extrudermaschine zu Pflanzenfasern mechanisch aufgefasert werden.

Darüber hinaus ist es beim erfindungsgemäßen Verfahren von Vorteil, wenn das Versehen der Oberfläche der Pflanzenfasern mit pflanzenwachstumsverbessernden Substanzen während der mechanischen Auffaserung des Pflanzenmaterials erfolgt, da die bei der mechanischen Auffaserung herrschenden Bedingungen für eine verbesserte Haftung der pflanzenwachstumsverbessernden Substanzen auf der Oberfläche der Pflanzenfasern sorgen.

Bei der Art der Zugabe der pflanzenwachstumsverbessernden Substanzen sind weitere Möglichkeiten denkbar.

Eine bevorzugte Möglichkeit sieht vor, daß dem Pflanzenmaterial vor der mechanischen Auffaserung zu den Pflanzenfasern die pflanzenwachstumsverbessernden Substanzen zugegeben werden.

Eine Alternative sieht vor, daß die pflanzenwachstumsverbessernden Substanzen den durch mechanische Auffaserung hergestellten Pflanzenfasern zugegeben und auf deren Oberfläche aufgebracht werden, das heißt, daß das Aufbringen auf der Oberfläche nach dem mechanischen Auffasern erfolgt.

Ferner sind hinsichtlich der Art und Weise der Zugabe der pflanzenwachstumsverbessernden Substanzen mehrere Möglichkeiten denkbar.

Eine vorteilhafte Möglichkeit ist die, die pflanzenwachstumsverbessernden Substanzen in flüssiger Form zuzugeben.

Eine alternative oder ergänzende Möglichkeit ist die, die pflanzenwachstumsverbessernden Substanzen in fester Form zuzugeben.

Ferner ist es insbesondere bei der Zugabe in fester Form denkbar, die pflanzenwachstumsverbessernden Substanzen durch Bepudern der Oberfläche der Pflanzenfasern auf diese aufzubringen.

Ganz generell ist es im Rahmen der vorliegenden Erfindung von Vorteil, wenn die pflanzenwachstumsverbessernden Substanzen auf der Oberfläche der Pflanzenfasern möglichst fest fixiert werden. Dies erfolgt vorzugsweise durch mechanische Einwirkung.

Besonders vorteilhaft ist es, das Auffasern des Pflanzenmaterials mit der mechanischen Einwirkung zur Fixierung der pflanzenwachstumsverbessernden Substanzen zu kombinieren, was insbesondere dadurch erfolgt, daß die pflanzenwachstumsverbessernden Substanzen durch mechanische Einwirkung während der mechanischen Auffaserung des Pflanzenmaterials auf der Oberfläche der Fasern fixiert werden.

Hinsichtlich der auf der Oberfläche der Pflanzenfasern aufzubringenden pflanzenwachstumsverbessernden Substanzen ist eine Vielzahl von Varianten und Kombinationen dieser Varianten denkbar.

Eine vorteilhafte Möglichkeit sieht vor, daß die pflanzenwachstumsverbessernden Substanzen basisch wirkende und einen pflanzengerechten pH-Wert der Pflanzenfasern einstellende pflanzenverträgliche Substanzen umfassen. Einzelne derartige Substanzen sind im Zusammenhang mit dem erfindungsgemäßen Basismaterial bereits erwähnt.

Alternativ oder ergänzend ist es denkbar, daß die pflanzenwachstumsverbessernden Substanzen die Pflanzenfasern gegen starken mikrobiellen Abbau schützende Substanzen sind.

Einzelne Beispiele derartiger Substanzen sind bereits im Zusammenhang mit dem erfindungsgemäßen Basismaterial genannt.

Darüber hinaus ist es alternativ oder ergänzend zu den vorstehend genannten Substanzen von Vorteil, wenn die pflanzenwachstumsverbessernden Substanzen die Ionenaustauschkapazität der Pflanzenfasern erhöhende Stoffe umfassen, wobei einzelne Beispiele derartiger Stoffe bereits im Zusammenhang mit dem erfindungsgemäßen Basismaterial genannt sind.

Schließlich ist es auch alternativ oder ergänzend zu den vorstehend genannten pflanzenwachstumsverbessernden Substanzen von Vorteil, wenn diese pflanzennährstoffträger umfassen. Auch derartige Pflanzennährstoffträger wurden im Zusammenhang mit dem erfindungsgemäßen Basismaterial detailliert beschrieben.

Außerdem ist es zusätzlich von Vorteil, wenn alternativ oder ergänzend zu den vorstehend genannten pflanzenwachstumsverbessernden Substanzen diese auch noch pflanzenwachstumsstimulierende Substanzen umfassen, wobei ebenfalls vorstehend im Zusammenhang mit dem Basismaterial Ausführungsbeispiele derartiger Substanzen genannt sind.

Ein weiteres Ausführungsbeispiel des erfindungsgemäßen Verfahrens sieht vor, daß als pflanzenwachstumsverbessernde Substanzen die Wasseraufnahmefähigkeit der Pflanzenfasern verbessernde Substanzen zugegeben werden. Besonders bevorzugt ist es zusätzlich, wenn auch die Wiederbenetzbarkeit der Fasern verbessernde Substanzen zugegeben werden. Beispiele derartiger Substanzen sind ebenfalls im Zusammenhang mit dem erfindungsgemäßen Basismaterial genannt.

Ein vorteilhaftes Ausführungsbeispiel eines erfindungsgemäßen Basismaterials umfaßt erfindungsgemäße, durch mechanisches Zerkleinern hergestellte unvertorfte Pflanzenfasern, welche auf ihrer Faseroberfläche mit Leonardit-Schiefer-Mehl, welches 75% Huminsäure enthält, Ureaform, kohlensaurem Kalk und Spurenelementdünger sowie zusätzlich noch mit NPK-Volldünger versehen sind. Dabei werden insbesondere Fichtenholzhackschnitzel verwendet, denen kohlensaurer Kalk, Ureaform und Leonardit-Schiefer-Mehl sowie der Spurenelementdünger vor dem Zerfasern zugegeben wird und nach dem Zerfasern wird diesen mit derartigen pflanzenwachstumsverbessernden Substanzen versehenen Pflanzenfasern noch der NPK-Volldünger zugemischt.

Das erfindungsgemäße Basismaterial kann im einfachsten Fall alleine als Substrat für die erfindungsgemäßen Kulturriegel eingesetzt werden.

Dabei umfaßt die einfachste Variante eines derartigen Kulturriegels als Substrat durch mechanisches Zerkleinern hergestellte unvertorfte Pflanzenfasern, welche auf ihrer Faseroberfläche mit einer basisch wirkenden und einen pflanzengerechten pH-Wert der Pflanzenfasern einstellenden pflanzenverträglichen Substanz als pflanzenwachstumsverbessernde Substanz versehen sind. Dies könnte im einfachsten Fall Kalk sein, welcher entweder vor dem Zerkleinern zugegeben wurde und somit während des Herstellens der unvertorften Pflanzenfasern auf die Faseroberfläche derselben aufgebracht wurde oder nach dem Zerkleinern den unvertorften Pflanzenfasern zugegeben wurde.

Darüberhinaus sieht eine weitere erfindungsgemäße Lösung vor, daß das Substrat neben dem erfindungsgemäßen Basismaterial noch weitere zusätzliche Substanzen umfaßt.

Die erfindungsgemäße Aufgabe wird somit auch durch einen Kulturriegel gelöst, bei welchem das Substrat einen Anteil von mehr als 10 Vol.% von Basismaterial aufweist, welches eines oder mehrere der vorstehend genannten Merkmale zeigt.

Noch vorteilhafter ist es, wenn der Anteil des Basismaterials mit den vorstehend beschriebenen Merkmalen mehr als 30 Vol.% beträgt.

Noch vorteilhafter ist es, wenn der Anteil des vorstehend beschriebenen Basismaterials mehr als 50 Vol.% beträgt.

Darüber hinaus ist vorgesehen, daß das Substrat noch zusätzlich Zuschlagstoffe umfaßt.

Derartige Zuschlagstoffe sind beispielsweise substratbelüftende Zuschlagstoffe, das heißt solche Zuschlagstoffe, die für eine besonders gute Belüftung des Substrats und somit des Wurzelwerks von in diesem Substrat wachsenden Pflanzen Sorge tragen.

Beispiele derartiger substratbelüftender Materialien sind Torf, Rinde, Perlite, Sand, Bimskies, gebrannte und geschäumte Tonmaterialien und Granulate aus geschäumten Kunststoffen.

Derartige substratbelüftende Stoffe können dem Kultursubstrat mit Anteilen von 0 bis 90 Vol.% zugegeben sein.

Ferner ist es vorteilhaft, wenn als Zuschlagstoffe substratvolumenstabilisierende Stoffe zugegeben sind. Derartige substratvolumenstabilisierende Stoffe sind Sand, Bimskies, gebrannte und geschäumte Tonmaterialien sowie Granulate aus geschäumten Kunststoffen, da diese dem mikrobiellen Abbau nicht unterworfen sind und somit ihr Volumen lange Zeit beibehalten. Derartige substratvolumenstabilisierende Stoffe können dein Kultursubstrat mit Anteilen von 0 bis 90 Vol.% zugegeben sein.

Schließlich ist es ebenfalls von Vorteil, wenn die Zuschlagstoffe wasserspeichernde Zuschlagstoffe sind. Diese Zuschlagstoffe sind dazu da, zusätzlich noch neben dem Basismaterial Wasser zu speichern. Derartige wasserspeichernde Zuschlagstoffe sind beispielsweise Torf, naturbelassene Tone, Bimskies sowie gebrannte und geschäumte offenporige Tonmaterialien, wie beispielsweise gebrochener Blähton, Ziegelsplitt und ähnliche Produkte. Derartige wasserspeichernde Stoffe können dem Kultursubstrat mit Anteilen von 0 bis 90 Vol.% zugegeben sein.

Schließlich ist es von Vorteil, wenn die Zuschlagstoffe Ionenaustauscheigenschaften aufweisende Zuschlagstoffe sind. Derartige Ionenaustauscheigenschaften aufweisende Zuschlagstoffe sind beispielsweise Tone mit unterschiedlichen Montmorillonitgehalten in Pulver oder Granulatform sowie zeolithhaltige Gesteinswerke und Vermiculite.

Vorzugsweise sind derartige Zuschlagstoffe mit einem Anteil von 7 bis 200 kg/m$^3$ dem Substrat beigemischt.

Ferner ist es von Vorteil, wenn dem Substrat Pflanzennährstoffträger zugegeben sind, wobei diese Pflanzennährstoffträger alternativ oder ergänzend zu auf der Oberfläche des Basismaterials aufgebrachten Pflanzennährstoffträgern vorgesehen sein können.

Beispielsweise ist es denkbar, die Oberfläche des Basismaterials mit einem notwendigen Grundgehalt an Pflanzennährstoffen zu versehen, dann aber dem Substrat, welches für spezielle Pflanzen geeignet sein soll, noch die speziellen Pflanzennährstoffträger zuzugeben.

Derartige Pflanzennährstoffträger können in vielfacher Art beigegeben sein.

Vorzugsweise kann es sich bei den Pflanzennährstoffträgern sowohl um organische und/oder anorganische Pflanzennährstoffträger handeln.

Anorganische Pflanzennährstoffträger sind beispielsweise Ammoniumsalze, Nitrate, Phosphate, Kalisalze, mineralische Volldünger, kunststoffumhüllte Einzel- oder Mehrnährstoffdünger mit Langzeitwirkung.

Als organische Pflanzennährstoffträger sind beispielsweise natürliche Stickstoffverbindungen, wie Guano, Hornmehl, Gülle, Mist oder synthetische Stickstoffverbindungen, wie Harnstoff, Harnstoff-Formaldehydkondensate, Dicyandiamid, Crotonylidendiurea usw einsetzbar.

Derartige Pflanzennährstoffträger sind vorzugsweise mit einem Anteil von 0,5 bis 3 kg/m$^3$ diesem zugegeben.

Schließlich ist vorteilhafterweise dem Substrat noch Kalk zugegeben, wobei der Kalk einen Anteil von 2 bis 6 kg/m$^3$ am Kultursubstrat hat, und mit dem Kalk ein pH-Wert des Substrats von ungefähr 4 bis ungefähr 6 einstellbar ist.

Darüber hinaus ist zweckmäßigerweise noch die Zugabe eines Spurennährstoffträgers als Pflanzennährstoffträger vorgesehen, wobei ein derartiger Spurennährstoffträger Eisen, Kupfer, Zink, Mangan, Molybdän als Salze, Chelate oder Metallmehl umfassen kann. Vorzugsweise beträgt der Anteil des Spurennährstoffträgers am Substrat 0,01 bis 0,2 $kg/m^3$.

Schließlich wird die erfindungsgemäße Aufgabe auch noch durch ein Substrat für Pflanzen gelöst, welches durch einen Anteil von mechanisch zerfaserten unvertorften Pflanzenfasern von mehr als 10 Vol.% gekennzeichnet ist.

Vorteilhafterweise beträgt der Anteil der mechanisch zerfaserten unvertorften Pflanzenfasern mehr als 30 Vol.% und noch besser ist es, wenn der Anteil der mechanisch zerfaserten unvertorften Pflanzenfasern mehr als 50 Vol.% beträgt.

Ferner ist es von Vorteil, wenn dieses Substrat pflanzenwachstumsverbessernde Substanzen umfaßt. Beispiele derartiger pflanzenwachstumsverbessernder Substanzen wurden eingangs im Zusammenhang mit dem erfindungsgemäßen Basismaterial genannt.

Darüber hinaus ist es von Vorteil, wenn das Substrat die physikalischen Eigenschaften desselben verbessernde Zuschlagstoffe umfaßt, wobei Beispiele und Mengenanteile derartiger Zuschlagstoffe im Zusammenhang mit dem vorstehend beschriebenen Substrat erläutert sind.

Schließlich ist es ebenfalls von Vorteil, wenn dieses Substrat Pflanzennährstoffträger umfaßt, die im einzelnen ebenfalls im Zusammenhang mit dem Substrat beschrieben sind und schließlich ist es von Vorteil, wenn dieses Substrat noch Kalk umfaßt, wobei der Anteil des Kalks vergleichbar mit dem vorstehend genannten ist.

Besonders vorteilhaft ist ein erfindungsgemäßes Substrat dann, wenn dieses mit wasserunlöslichen pflanzenwachstumsverbessernden Substanzen versehene Pflanzenfasern aufweist. Derart behandelte Pflanzenfasern haben den großen Vorteil, daß sich die pflanzenwachstumsverbessernden Substanzen nicht in der Nährlösung für die Hydrokultur auflösen und mit dieser ausgeschwemmt werden, sondern in dem Substrat verbleiben.

Besonders zweckmäßig ist es, wenn das Basismaterial oder das Substrat auf konventionelle Nährlösungen für Hydrokulturen im wesentlichen substanzaustauschneutral reagieren, das heißt an diese Nährlösung keine Substanzen abgibt und auch aus diesen Nährlösungen keine Substanzen aufnimmt, so daß das Basismaterial - obwohl es sich um ein anorganisches Material handelt - auf die Nährlösung im wesentlichen wie ein inertes Material reagiert.

Besonders zweckmäßig ist es dabei, wenn das Basismaterial auf konventionelle Nährlösung für Hydrokulturen im wesentlichen stickstoffaufnahmeneutral reagiert, und somit den Stickstoffgehalt der konventionellen Nährlösung nicht verändert.

Als konventionelle Nährlösung kommt insbesondere eine Nährlösung in Betracht, wie sie bei den aus dem Stand der Technik bekannten Hydrokulturverfahren mit Steinwolle als Substrat, sogenannten Steinwollkulturen, bekannt sind.

Ein weiteres vorteilhaftes Ausführungsbeispiel eines derartigen Kulturriegels sieht vor, daß die Hydrokultur eine Sackkultur mit automatischer Tropfbewässerung ist, wobei insbesondere die automatische Tropfbewässerung im geschlossenen System erfolgt. Insbesondere bei derartigen Hydrokulturen ist es von Bedeutung, daß das Basismaterial oder das Substrat auf konventionelle Nährlösung im wesentlichen substanzaustauschneutral reagiert.

Ferner sieht ein besonders bevorzugtes Ausführungsbeispiel eines erfindungsgemäßen Substrats vor, daß dieses in einer Folienverpackung blockförmig abgepackt ist, insbesondere ist die Folienverpackung dabei als geschlossener Foliensack ausgebildet, so daß das erfindungsgemäße Substrat einfach handhabbar ist.

Bei dem erfindungsgemäßen Kulturriegel braucht die Umhüllung aber nicht notwendigerweise ein geschlossener Foliensack sein. Es ist ebenfalls im Rahmen der erfindungsgemäßen Lösung denkbar und vorteilhaft, als Umhüllung ein Netz oder eine Lochfolie zu verwenden.

Darüberhinaus ist es bei der erfindungsgemäßen Lösung vorteilhaft, die Umhüllung aus einem biologisch abbaubaren Material, das heißt entweder einem entsprechenden Papier oder einer biologisch abbaubaren, beispielsweise kompostierbaren, Folie herzustellen, so daß der erfindungsgemäße Kulturriegel als Ganzes weiterverwertbar ist, ohne daß irgendwelche Bestandteile zurückbleiben, welche einer gesonderten Entsorgung bedürfen.

Schließlich besteht die Erfindung auch noch in der Verwendung eines Basismaterials oder eines Substrats mit den vorstehend beschriebenen Merkmalen als Substrat für erdlose Hydrokulturen, insbesondere mit einem oder mehreren der vorstehend beschriebenen Merkmale von Hydrokulturen.

Ein besonders vorteilhaftes erfindungsgemäßes Substrat umfaßt erfindungsgemäß aufgefaserte Pflanzenfasern, versehen mit Leonardit-Schiefer-Mehl als Huminsäureträger, Ureaform als Stickstoffträger, kohlensaurem Kalk zur Pufferung und Spurenelementdünger, wobei sowohl das Leonardit-Schiefer-Mehl, Ureaform und kohlensaurer Kalk nicht wasserlöslich oder schwer wasserlöslich sind.

Weitere Merkmale und Vorteile der Erfindung ergeben sich aus den nachstehend genannten Ausführungsbeispielen bevorzugter Kultursubstrate.

Die Erfindung wird anhand eines Ausführungsbeispiels beschrieben. Bei diesem Ausführungsbeispiel handelt es ich um einen Kulturriegel zum Einsatz in professionellen Gärtnereien für Nutzpflanzen.

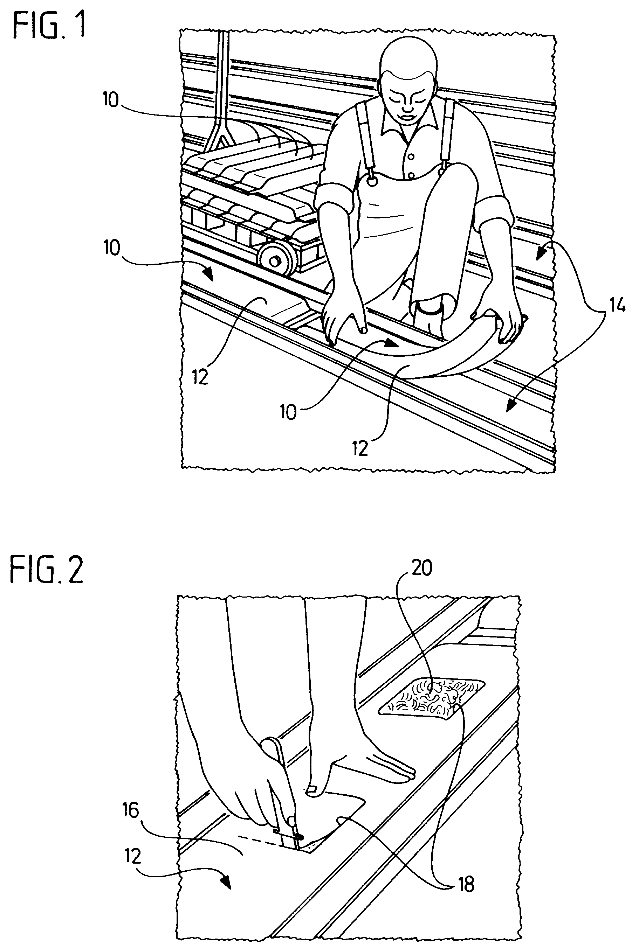

Bei den in Fig. 1 dargestellten erfindungsgemäßen Kulturriegeln 10 ist das Substrat in einem geschlossenen, schlauchförmigen Foliensack 12 abgepackt.

Derartige Kulturriegel 10 werden aufeinanderfolgend in eine dafür vorgesehene Rinne 14 eingelegt.

Danach werden, wie in Fig. 2 dargestellt, in eine Oberseite 16 der Foliensäcke 12 Öffnungen 18 geschnitten, welche zum Aufsetzen der anzuziehenden Pflanzen dienen. Durch diese Öffnungen 18 wird das in dem Foliensack 12 enthaltene Substrat freigelegt.

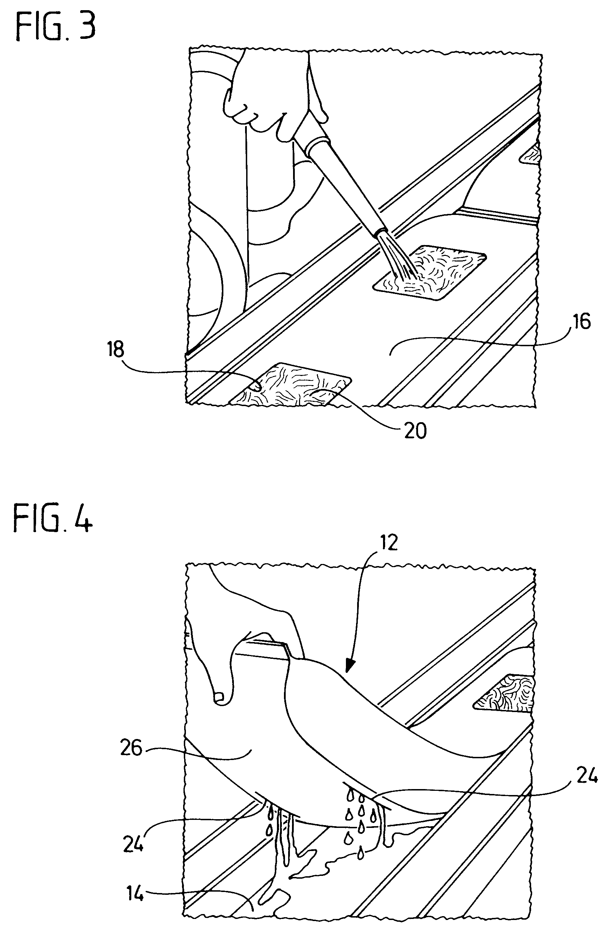

Wie in Fig. 3 dargestellt, erfolgt zunächst durch diese Öffnungen 18 ein Wässern des Substrats 20, wobei durch den geschlossenen Foliensack 12 das durch die Öffnungen 18 eingebrachte Wasser in dem Foliensack 12 verbleibt und nicht abläuft.

Damit besteht die Möglichkeit, daß sich das Substrat 20 vollständig mit Wasser vollsaugt.

Das überschüssige Wasser wird, wie in Fig. 4 dargestellt, nach einer Wartezeit, während sich das Substrat 20 vollständig vollsaugen kann, durch Einbringen von Schlitzen 24 in eine Unterseite 26 des Foliensacks 12 zum Abfließen in den Rinnen 14 gebracht.

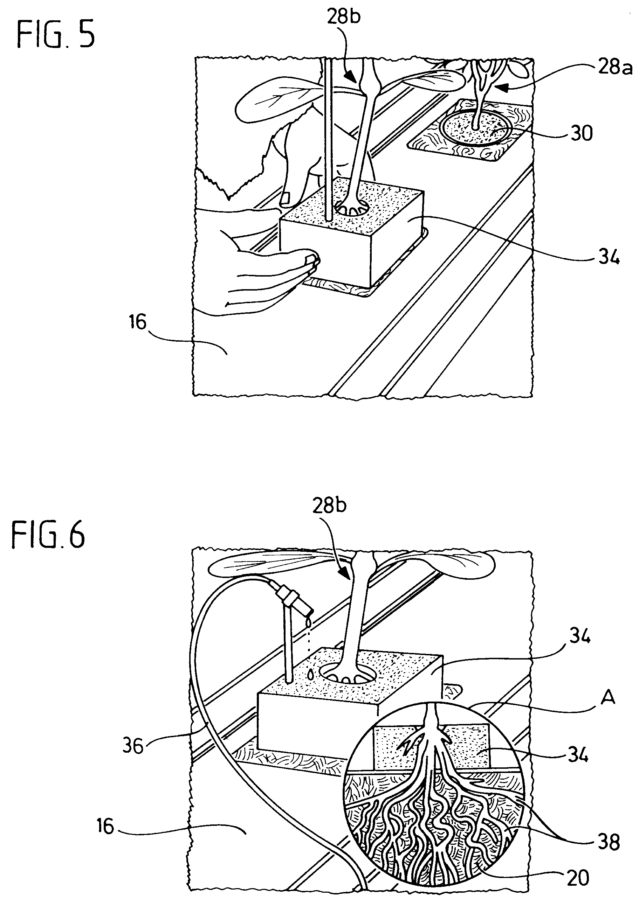

Auf den so vorbereiteten Kulturriegel wird, wie in Fig. 5 dargestellt, die anzuziehende Pflanze 28 aufgesetzt, und zwar entweder direkt mit ihrem Wurzelballen 30 in das Substrat 20 eingesetzt, wie am Beispiel der Pflanze 28a dargestellt, oder lediglich auf das in den Öffnungen 18 freiliegende Substrat 20 aufgesetzt, wie am Beispiel der Pflanze 28b dargestellt. Bei der Pflanze 28b handelt es sich um eine beispielsweise in einem Block 34 aus Steinwolle angezogenen Setzling.

Wie in Fig. 6 dargestellt, erfolgt eine Versorgung der Pflanze 28b über eine Leitung 36, welche Nährlösung in den Wurzelbereich der Pflanze 28b und insbesondere in das Substrat 20 im Bereich der Pflanze 28b eintropfen läßt, so daß wie in dem mit A bezeichneten vergrößerten Ausschnitt in Fig. 6 dargestellt, die Pflanze 28b mit ihrem Wurzelwerk 38 in das Substrat 20 wurzelt und die in dieses eingetropfte Nährlösung aufnimmt.

Beim Beenden der Kultur werden die Kulturriegel 10 aus den Rinnen 14 entfernt und das Substrat 20 kann kompostiert oder als Bodenverbesserer oder Dünger in anderen Kulturen eingesetzt werden, insbesondere da es nach wie vor noch mit Resten der Nährlösung angereichert ist. Auch das darin enthaltene Wurzelwerk 38 der Pflanzen 28b braucht nicht entfernt zu werden.

Besonders vorteilhaft läßt sich der erfindungsgemäße Kulturriegel dann noch weiterverwenden, wenn der Foliensack 12 aus einem biologisch abbaubaren, beispielsweise kompostierbaren Material hergestellt ist.

Im einfachsten Fall besteht das Substrat lediglich aus Basismaterial, welches die durch mechanisches Zerkleinern hergestellten und vertorften Pflanzenfasern umfaßt, welche auf ihrer Faseroberfläche mit einer einem pflanzenverträglichen pH-Wert einstellenden Substanz, Kalk versehen sind.

Vorzugsweise erfolgt die Herstellung des erfindungsgemäß verwendeten Fasermaterials durch die Zerfaserung von Rückständen aus holzverarbeitenden, landwirtschaftlichen Betrieben und Forstbetrieben, wie Baumrinde, Schwachholz, Äste, Holzhackschnitzel, vorzugsweise Weichholzhackschnitzel, Stroh, Pflanzenstengel und ähnlichem.

Derartige Rückstände werden in eine Doppelschneckenaufbereitungsanlage DSA 100 der Firma UWAS Umwelttechnik GmbH, Mayerbacherstraße 69, D-8045 Ismaning oder eine ähnliche, Pflanzenmaterial durch Zerreiben oder Zerquetschen, vorzugsweise bei hoher Temperatur und hohem Druck, auffasernde Aufbereitungsanlage beispielsweise mit Doppelschnecken eingegeben und mit dieser zu dem erfindungsgemäß verwendeten Fasermaterial verarbeitet.

Ausgehend von einer derartigen Herstellung des Fasermaterials sind folgende vorteilhaften Beispiele eines erfindungsgemäßen Basismaterials herstellbar:

Beispiel 1.1

Der Doppelschneckenaufbereitungsanlage werden Weichholzhackschnitzel, insbesondere Kiefer-, Fichten-, Pinien-, Tannenhackschnitzel, kohlensaurer Kalk, über separate Dosiervorrichtungen zugegeben, wobei die Mischungsverhältnisse 1 m$^3$ Weichholzhackschnitzel auf ungefähr 3,5 kg kohlensauren Kalk beträgt.

Beispiel 1.2

Weichholzhackschnitzel und Leonardit-Schiefer-Mehl werden der Doppelschneckenaufbereitungsanlage DSA 100 zugegeben, wobei die Dosierung so erfolgt, daß 1 m$^3$ Weichholzhackschnitzel ungefähr 1,5 kg huminsäurehaltiges Leonardit-Schiefer-Mehl zugegeben werden. Diese Mischung wird in der Doppelschneckenaufbereitungsanlage DSA 100 mechanisch zerfasert und gleichzeitig wird das Leonardit-Schiefer-Mehl auf die Pflanzenfasern aufgebracht.

Beispiel 1.3

Fichtenholzhackschnitzel und Braunkohlenstaub werden über separate Dosiervorrichtungen der Doppelschneckenaufbereitungsanlage DSA 100 zugegeben, wobei die Dosierung so erfolgt, daß 1 m$^3$ Fichtenholzhackschnitzel 3 kg Braunkohlenstaub zugegeben werden. Diese Mischung wird in der Doppelschneckenaufbereitungsanlage DSA 100 mechanisch zerfasert und gleichzeitig wird der Braunkohlenstaub auf die Fasern aufgebracht.

Beispiel 1.4

Über separate Dosiervorrichtungen werden Fichtenholzhackschnitzel, Braunkohlenstaub und Tonmehl der Doppelschneckenaufbereitungsanlage DSA 100 zugegeben, wobei die Mischungsverhältnisse so gewählt werden, daß zu 1 m$^3$ Fichtenholzhackschnitzel 3 kg Braunkohlenstaub und 2 kg Tonmehl hinzugegeben werden, wobei das Tonmehl vorzugsweise einen Montmorillonitgehalt von ungefähr 70 % aufweist.

Beispiel 1.5

Der Doppelschneckenaufbereitungsanlage DSA 100 werden Fichtenholzhackschnitzel, Braunkohlenstaub und Huminsäurepulver über separate Dosiervorrichtungen zugegeben, wobei die Mischungsverhältnisse 1 m$^3$ Fichtenholzhackschnitzel auf 3 kg Kohlenstaub und 2 kg Huminsäurepulver betragen.

Beispiel 1.6

Der Doppelschneckenaufbereitungsanlage werden Fichtenholzhackschnitzel, kohlensaurer Kalk, Braunkohlenstaub, Tonmehl mit ungefähr 70 % Montmorillonitgehalt und Huminsäurepulver über separate Dosiervorrichtungen zugegeben, wobei die Mischungsverhältnisse 1 m$^3$ Fichtenholzhackschnitzel auf 3,5 kg kohlensauren Kalk, 3 kg Braunkohlenstaub, 2 kg Tonmehl und 2 kg Huminsäurepulver betragen.

Beispiel 1.7

Der Doppelschneckenaufbereitungsanlage DSA 100 werden Fichtenholzhackschnitzel, kohlensaurer Kalk, Braunkohlenstaub, Tonmehl mit ungefähr 70 % Montmorillonitgehalt und Dünger über separate Dosiervorrichtungen zugegeben, wobei die Mischungsverhältnisse 1 m$^3$ Fichtenholzhackschnitzel, 3,5 kg kohlensaurer Kalk, 3 kg Braunkohlenstaub, 2 kg Tonmehl und 1,5 kg Ureaform als Düngemittel betragen.

Beispiel 1.8

Der Doppelschneckenaufbereitungsanlage DSA 100 werden Fichtenholzhackschnitzel, Braunkohlenstaub und hochdisperse Kieselsäure über separate Dosiervorrichtungen zugegeben, wobei die Mischungsverhältnisse 1 m$^3$ Fichtenholzhackschnitzel, 3 kg Braunkohlenstaub und 1 kg hochdisperse Kieselsäure betragen.

Beispiel 1.9

Der Doppelschneckenaufbereitungsanlage DSA 100 werden Fichtenholzhackschnitzel, Braunkohlenstaub und Wasserglas über separate Dosiervorrichtungen zugegeben, wobei die Mischungsverhältnisse 1 m$^3$ Fichtenholzhackschnitzel, 3 kg Braunkohlenstaub und 0,5 kg Wasserglas betragen.

Beispiel 1.10

Der Doppelschneckenaufbereitungsanlage DSA 100 werden Fichtenholzhackschnitzel eingegeben. In den Zerfaserungsblock der Doppelschneckenmaschine werden über separate Dosiervorrichtungen zuerst 0,5 kg Wasserglas und anschließend 1 kg vorzugsweise 75 %ige Phosphorsäure zugegeben, um damit einen pH-Wert der erzeugten Pflanzenfasern von ungefähr 4 bis ungefähr 6 einzustellen.

Beispiel 1.11

Bei allen Beispielen 1.1 bis 1.10 werden die Fichtenholzhackschnitzel vor ihrer Eingabe in die Doppelschneckenaufbereitungsanlage DSA 100 vorbehandelt, und zwar mit einer NPK-Düngerlösung 8-8-6, wobei auf 1 m$^3$ Fichtenholzhackschnitzel 2,4 l derartiger Düngerlösung aufgesprüht werden. Diese NPK-Düngerlösung hat folgende Zusammensetzung:
8 % Gesamtstickstoff, 8 % wasserlösliches Phosphat, 6 % wasserlösliches Kaliumoxid.

Beispiel 1.12

Die Pflanzenfasern, hergestellt gemäß Beispiel 1.1 bis 1.8 werden mit Wasserglas und Phosphorsäure besprüht und anschließend entsprechend dem gewünschten Feuchtigkeitsgehalt des Basismaterials getrocknet. Dabei werden auf 1 m$^3$ Pflanzenfasern zunächst 0,5 kg Wasserglas aufgesprüht und anschließend 1 kg etwa 75%ige Phosphorsäure, so daß ein pH-Wert der Pflanzenfasern zwischen ungefähr 4 und ungefähr 6 entsteht.

Beispiel 1.13

Die gemäß den Beispielen 1.1 bis 1.10 hergestellten Pflanzenfasern werden mit einer NPK-Düngerlösung 8-8-6 besprüht und anschließend auf den gewünschten Feuchtigkeitsgehalt getrocknet.

Dabei wird 1 m³ Pflanzenfasern mit 2,4 l NPK-Düngerlösung 8-8-6 besprüht, wobei diese Düngerlösung 8 % Gesamtstickstoff, 8 % wasserlösliches Phosphat und 6 % wasserlösliches Kaliumoxid aufweist.

Beispiel 1.14

Pflanzenfasern, hergestellt gemäß den Beispielen 1.3, 1.4 und 1.7 bis 1.10, werden mit Harnstofflösung und Huminsäureextrakt besprüht und anschließend bis zum gewünschten Feuchtigkeitsgehalt getrocknet, wobei auf 1 m³ Pflanzenfaser ungefähr 1 l ungefähr 50%ige Harnstofflösung und 1 l Huminsäureextrakt mit 12 % Huminsäureanteil aufgesprüht werden.

Beispiel 1.15

Der Doppelschneckenaufbereitungsanlage DSA 100 werden 1 m³ Fichtenholzhackschnitzel, 1,5 kg huminsäurehaltiges Leonardit-Schiefer-Mehl, 1,5 kg Ureaform, 2,25 kg kohlensaurer Kalk und 0,15 kg Spurenelementdünger zugegeben. 1 m³ derartiger, mit pflanzenwachstumsverbessernden Substanzen versehener aus der Doppelschneckenaufbereitungsanlage DSA 100 kommender Pflanzenfasern werden ferner 2 kg NPK-Volldünger 12-12-17-2 zugegeben und untergemischt.

Die vorstehend erläuterten Beispiele von Basismaterialien können selbständig als Substrat für Kulturriegel Verwendung finden. Darüber hinaus ist ausgehend von dem Basismaterial gemäß den Beispielen 1.1 bis 1.15 ein Substrat für Kulturriegel herstellbar, welches die in den nachfolgenden Beispielen angegebenen Bestandteile aufweist:

Beispiel 2.1

Zu dem erfindungsgemäßen Basismaterial gemäß den Beispielen 1.1 bis 1.15 werden kohlensaurer Kalk, mineralischer NPK-Volldünger 12-12-17-2 und 100 g Spurenelementdünger, z.B. Radigen, zugegeben, wobei auf 1 m³ des erfindungsgemäßen Basismaterials 2 kg kohlensaurer Kalk, 2 kg mineralischer NPK-Volldünger und 100 g Spurenelementdünger entfallen.

Beispiel 2.2

Das Kultursubstrat gemäß Beispiel 2.1 umfaßt zusätzlich noch Stickstofflangzeitdünger, beispielsweise ein synthetisches Harnstoff-Formaldehyd-Kondensat, wie Ureaform, mit einem Anteil von einem kg auf 1m³ des erfindungsgemäßen Basismaterials.

Beispiel 2.3

Das Kultursubstrat für Pflanzen umfaßt das erfindungsgemäße Basismaterial, zusätzlich kohlensauren Kalk, mineralischen NPK-Volldünger 12-12-17-2, Tonmehl mit zirka 70 % Montmorillonitgehalt und Spurenelementdünger, wobei auf 1m³ des erfindungsgemäßen Basismaterials 2 kg kohlensaurer Kalk, 2 kg NPK-Volldünger, 15 kg Tonmehl und 100 g Spurenelementdünger, z.B. Radigen, kommen.

Beispiel 2.4

Das erfindungsgemäße Basismaterial wird mit Hochmoortorf vermischt und dieser Mischung werden kohlensaurer Kalk, mineralischer NPK-Volldünger 12-12-17-2 und Spurenelementdünger zugegeben, wobei auf 500 l Basismaterial 500 l Hochmoortorf, 4 kg kohlensaurer Kalk, 2 kg mineralischer NPK-Volldünger und 100 g Spurenelementdünger entfallen.

Beispiel 2.5

Das Kultursubstrat gemäß Beispiel 2.4 umfaßt zusätzlich noch Stickstofflangzeitdünger, wobei auf 500 l Basismaterial 1 kg Stickstofflangzeitdünger entfallen.

Beispiel 2.6

Das erfindungsgemäße Basismaterial wird mit Hochmoortorf vermischt und dieser Mischung werden kohlensaurer Kalk, mineralischer NPK-Volldünger 12-12-17-2, Ureaform und Tongranulat mit 20% Montmorillonitgehalt zugegeben, wobei auf 500 l Basismaterial 500 l Hochmoortorf, 4 kg kohlensaurer Kalk, 2 kg mineralischer NPK-Volldünger, 1,5 kg Ureaform und 40 kg Tongranulat entfallen.

Weitere Ausführungsbeispiele eines erfindungsgemäßen Kultursubstrats verwenden die eingangs beschriebenen und mit der Doppelschneckenaufbereitungsanlage DSA 100 hergestellten Pflanzenfasern, insbesondere Pflanzenfasern aus Forstrückständen.

Die Zusammensetzung derartiger Substrate für Kulturriegel ergibt sich aus den folgenden Ausführungsbeispielen:

Beispiel 3.1

Die Pflanzenfaser wird mit kohlensaurem Kalk, mineralischem NPK-Volldünger 12-12-17-2 und Tonmehl sowie Spurenelementdünger vermischt, wobei auf 1 m³ Pflanzenfaser 2 kg kohlensaurer Kalk, 2 kg mineralischer NPK-Volldünger, 15 kg Tonmehl mit ungefähr 70 % Montmorillonitgehalt und 100 g Spurenelementdünger kommen.

Beispiel 3.2

Mit der Doppelschneckenaufbereitungsanlage DSA 100 hergestellte Pflanzenfaser wird mit Hochmoortorf gemischt und zu dieser Mischung werden kohlensaurer Kalk, mineralischer NPK-Volldünger 12-12-17-2 und Spurenelementdünger, z.B. Radigen, zugegeben, wobei auf 300 l Pflanzenfaser 700 l Hochmoortorf, 4 kg kohlensaurer Kalk, 2 kg mineralischer NPK-Volldünger und 100g Spurenelementdünger kommen.

Beispiel 3.3

Mit der Doppelschneckenaufbereitungsanlage DSA 100 hergestellte Pflanzenfasern werden mit kompostierter Nadelholzrinde und Hochmoortorf vermischt und zu dieser Mischung werden kohlensaurer Kalk, mineralischer NPK-Volldünger 12-12-17-2 und Spurenelementdünger zugegeben, wobei auf 333 l Pflanzenfasern 333 l kompostierte Nadelholzrinde und 333 l Hochmoortorf kommen und zu der Mischung dieser 3 Bestandteile 4 kg kohlensaurer Kalk, 2 kg NPK-Volldünger und 100 g Spurenelementdünger zugegeben werden.

Beispiel 3.4

Ein erfindungsgemäßes Kultursubstrat enthält die Anteile des Kultursubstrats gemäß Beispiel 3.3 und zusätzlich noch Stickstofflangzeitdünger, z.B. synthetische Harnstoff-Formaldehydkondensate, wie Ureaform, wobei der Mischung aus 333 l Pflanzenfaser, 333 l kompostierter Nadelholzrinde und 333 l Hochmoortorf 1 kg Stickstofflangzeitdünger zusätzlich zugegeben werden.

Beispiel 3.5

Ein erfindungsgemäßes Kultursubstrat enthält neben den Anteilen des Beispiels 3.4 noch zusätzlich Tongranulat mit zirka 20 % Montmorillonitgehalt, wobei der Mischung aus 333 l Pflanzenfaser, 333 l kompostierter Nadelholzrinde und 333 l Hochmoortorf noch zusätzlich 120 kg Tongranulat zugegeben werden.

Alle vorstehend beschriebenen Beispiele der erfindungsgemäßen Kultursubstrate sind so hergestellt, daß sie einen pH-Wert zwischen ungefähr 4 und ungefähr 6 aufweisen.

Das erfindungsgemäße Basismaterial oder erfindungsgemäße Substrate lassen sich vorzugsweise in professionellen, insbesondere Nutzpflanzenbereichen einsetzen.

Eine besonders bevorzugte Einsatzmöglichkeit der erfindungsgemäßen Basismaterialien oder Kultursubstrate ist insbesondere bei erdlosen Kulturverfahren, insbesondere erdlosen Hydrokulturen möglich.

Beispielsweise lassen sich Sackkulturen im geschlossenen System mit automatischer Tropfbewässerung unter Verwendung eines erfindungsgemäßen Basismaterials oder Kultursubstrats als Substrat durchführen.

Beispielsweise hat ein derartiges professionelles Substrat folgende Zusammensetzung:

Beispiel 4.1

Fichtenholzhackschnitzel werden der Doppelschneckenaufbereitungsanlage DSA 100 zusammen mit kohlensaurem Kalk, Ureaform, Spurenelementdünger und huminsäurehaltigem Leonardit-Schiefer-Mehl zugegeben, wobei als vorteilhaftes Mischungsverhältnis zu einem 1 $m^3$ Fichtenholzhackschnitzel 1,5 kg huminsäurehaltiges Leonardit-Schiefer-Mehl, 1,5 kg Ureaform und 2,25 kg kohlensaurer Kalk sowie 0,15 kg Spurenelementdünger zugegeben werden. Der pH-Wert wird hierbei im Bereich zwischen ungefähr 4 und ungefähr 6 eingestellt.

Substrate gemäß den Beispielen werden in Form von quaderförmigen Preßlingen beispielsweise in Polyäthylenfolie allseitig umschlossen verpackt, wobei bei einem Beispiel die Preßlinge Abmessungen von 90 x 15 x 8 cm aufweisen.

Es ist aber außerdem möglich die erfindungsgemäßen Substrate im Zierpflanzenbereich einzusetzen und daher sind auch hinsichtlich der pflanzenwachstumsverbessernden Stoffe auf Zierpflanzen abgestimmt.

**Patentansprüche**

1. Kulturriegel für im wesentlichen erdlose Hydrokulturen, umfassend ein in einer Umhüllung abgepacktes Substrat, dadurch gekennzeichnet, daß das Substrat ein Basismaterial aufweist und daß das Basismaterial durch mechanisches Zerkleinern hergestellte unvertorfte Pflanzenfasern umfaßt, welche auf ihrer Faseroberfläche mit einer pflanzenwachstumsverbessernden Substanz versehen sind.

2. Kulturriegel nach Anspruch 1, dadurch gekennzeichnet, daß die mechanisch aufgefaserten Pflanzenfasern maschinell durch Einwirkung von Scherkräften bei einer Temperatur von mehr als 60° C hergestellt sind.

3. Kulturriegel nach Anspruch 2, dadurch gekennzeichnet, daß die maschinell aufgefaserten Pflanzenfasern durch Auffasern von Pflanzenmaterial in einer Extrudervorrichtung hergestellt sind.

4. Kulturriegel nach einem der voranstehenden Ansprüche, dadurch gekennzeichnet, daß die pflanzenwachstumsverbessernde Substanz im Verlauf des mechanischen Auffaserns des Pflanzenmaterials auf die Oberfläche der Pflanzenfasern aufgebracht ist.

5. Kulturriegel nach einem der voranstehenden Ansprüche, dadurch gekennzeichnet, daß die pflanzenwachstumsverbessernde Substanz eine basisch wirkende und einen pflanzengerechten pH-Wert der Pflanzenfasern einstellende pflanzenverträgliche Substanz umfaßt.

6. Kulturriegel nach einem der voranstehenden Ansprüche, dadurch gekennzeichnet, daß die pflanzenwachstumsverbessernde Substanz eine die Pflanzenfasern gegen starken mikrobiellen Abbau schützende Substanz umfaßt.

7. Kulturriegel nach Anspruch 6, dadurch gekennzeichnet, daß die die Fasern gegen starken mikrobiellen Abbau schützende Substanz eine die Pflanzenfasern mit einem Überzug versehende Substanz ist.

8. Kulturriegel nach einem der voranstehenden Ansprüche, dadurch gekennzeichnet, daß die pflanzenwachstumsverbessernde Substanz einen die Ionenaustauschkapazität der Pflanzenfasern erhöhender Stoff umfaßt.

9. Kulturriegel nach einem der voranstehenden Ansprüche, dadurch gekennzeichnet, daß die pflanzenwachstumsverbessernde Substanz Pflanzennährstoffträger umfaßt.

10. Kulturriegel nach Anspruch 9, dadurch gekennzeichnet, daß die Pflanzennährstoffträger organische Substanzen umfassen.

11. Kulturriegel nach Anspruch 9, dadurch gekennzeichnet, daß die Pflanzennährstoffträger anorganische Stoffe umfassen.

12. Kulturriegel nach einem der voranstehenden Ansprüche, dadurch gekennzeichnet, daß die pflanzenwachstumsverbessernde Substanz Spurennährstoffträger umfaßt.

13. Kulturriegel nach einem der voranstehenden Ansprüche, dadurch gekennzeichnet, daß die pflanzenwachstumsverbessernde Substanz eine pflanzenwachstumsstimulierende Substanz umfaßt.

14. Kulturriegel nach einem der voranstehenden Ansprüche, dadurch gekennzeichnet, daß die pflanzenwachstumsverbessernde Substanz eine die Wasseraufnahmefähigkeit der Pflanzenfasern verbessernde Substanz umfaßt.

15. Kulturriegel nach einem der voranstehenden Ansprüche, dadurch gekennzeichnet, daß die pflanzenwachstumsverbessernde Substanz eine die Wiederbenetzbarkeit der Fasern nach einem Austrocknen verbessernde Substanz umfaßt.

16. Verfahren zur Herstellung eines Basismaterials für Kulturriegel, dadurch gekennzeichnet, daß durch mechanische Auffaserung von Pflanzenmaterial mit hohem Zellulose und Ligninanteil, insbesondere von verholztem Pflanzenmaterial, unvertorfte Pflanzenfasern hergestellt werden und daß diese Pflanzenfasern auf ihrer Oberfläche mit einer pflanzenwachstumsverbessernden Substanz versehen werden.

17. Verfahren nach Anspruch 16, dadurch gekennzeichnet, daß das Pflanzenmaterial durch Einwirkung von Scherkräften bei einer Temperatur von mehr als 60° C mechanisch zu unvertorften Pflanzenfasern aufgefasert wird.

18. Verfahren nach Anspruch 17, dadurch gekennzeichnet, daß das Pflanzenmaterial in einer Extrudermaschine zu Pflanzenfasern mechanisch aufgefasert wird.

19. Verfahren nach einem der Ansprüche 16 bis 18, dadurch gekennzeichnet, daß das Versehen der Oberfläche der Pflanzenfasern mit einer pflanzenwachstumsverbessernden Substanz während der mechanischen Auffaserung des Pflanzenmaterials erfolgt.

20. Verfahren nach einem der Ansprüche 16 bis 19, dadurch gekennzeichnet, daß dem Pflanzenmaterial vor der mechanischen Auffaserung zu den Pflanzenfasern die pflanzenwachstumsverbessernde Substanz zugegeben wird.

21. Verfahren nach einem der Ansprüche 16 bis 20, dadurch gekennzeichnet, daß die pflanzenwachstumsverbessernde Substanz den durch mechanische Auffaserung hergestellten Pflanzenfasern zugegeben und auf deren Oberfläche aufgebracht wird.

22. Verfahren nach einem der Ansprüche 16 bis 21, dadurch gekennzeichnet, daß die pflanzenwachstumsverbessernde Substanz in flüssiger Form zugegeben wird.

23. Verfahren nach einem der Ansprüche 16 bis 22, dadurch gekennzeichnet, daß die pflanzenwachstumsverbessernde Substanz in fester Form zugegeben wird.

24. Verfahren nach einem der Ansprüche 16 bis 23, dadurch gekennzeichnet, daß die pflanzenwachstumsverbessernde Substanz durch Bepudern der Pflanzenfasern auf deren Oberfläche aufgebracht wird.

25. Verfahren nach einem der Ansprüche 16 bis 24, dadurch gekennzeichnet, daß die pflanzenwachstumsverbessernden Substanzen auf der Oberfläche der Pflanzenfasern durch mechanische Einwirkung fixiert werden.

26. Verfahren nach Anspruch 25, dadurch gekennzeichnet, daß die pflanzenwachstumsverbessernde Substanz durch mechanische Einwirkung während der mechanischen Auffaserung des Pflanzenmaterials auf der Oberfläche der Fasern fixiert wird.

27. Verfahren nach einem der Ansprüche 16 bis 26, dadurch gekennzeichnet, daß als pflanzenwachstumsverbessernde Substanz eine basisch wirkende und einen pflanzengerechten pH-Wert der Pflanzenfasern einstellende pflanzenverträgliche Substanz zugegeben wird.

28. Verfahren nach einem der Ansprüche 16 bis 27, dadurch gekennzeichnet, daß als pflanzenwachstumsverbessernde Substanz eine die Pflanzenfasern gegen starken mikrobiellen Abbau schützende Substanz zugegeben wird.

29. Verfahren nach Anspruch 28, dadurch gekennzeichnet, daß die die Fasern gegen starken mikrobiellen Abbau schützende Substanz eine die Pflanzenfasern mit einem Überzug versehende Substanz ist.

30. Verfahren nach einem der Ansprüche 16 bis 29, dadurch gekennzeichnet, daß als pflanzenwachstumsverbessernde Substanz ein die Ionenaustauschkapazität der Pflanzenfasern erhöhender Stoff zugegeben wird.

31. Verfahren nach einem der Ansprüche 16 bis 30, dadurch gekennzeichnet, daß als pflanzenwachstumsverbessernde Substanz ein Pflanzennährstoffträger zugegeben wird.

32. Verfahren nach einem der Ansprüche 16 bis 31, dadurch gekennzeichnet, daß als pflanzenwachstumsverbessernde Substanz ein Spurennährstoffträger zugegeben wird.

33. Verfahren nach einem der Ansprüche 16 bis 32, dadurch gekennzeichnet, daß als pflanzenwachstumsverbessernde Substanz eine pflanzenwachstumsstimulierende Substanz zugegeben wird.

34. Verfahren nach einem der Ansprüche 16 bis 33, dadurch gekennzeichnet, daß als pflanzenwachstumsverbessernde Substanz eine die Wasseraufnahmefähigkeit der Pflanzenfasern verbessernde Substanz zugegeben wird.

35. Verfahren nach einem der Ansprüche 16 bis 34, dadurch gekennzeichnet, daß als pflanzenwachstumsverbessernde Substanz eine die Wiederbenetzbarkeit der Fasern nach einem Austrocknen verbessernde Substanz zugegeben wird.

36. Kulturriegel nach einem der Ansprüche 1 bis 15, dadurch gekennzeichnet, daß das Basismaterial nach einem der Ansprüche 16 bis 35 hergestellt ist.

37. Kulturriegel nach einem der Ansprüche 1 bis 15 und 36, dadurch gekennzeichnet, daß das Substrat einen Anteil von mehr als 10 Vol.% des Basismaterials aufweist.

38. Kulturriegel nach Anspruch 37, dadurch gekennzeichnet, daß der Anteil des Basismaterials mehr als 30 Vol.% beträgt.

39. Kulturriegel nach einem der Ansprüche 37 oder 38, dadurch gekennzeichnet, daß der Anteil des Basismaterials mehr als 50 % beträgt.

40. Kulturriegel nach einem der Ansprüche 37 bis 39, dadurch gekennzeichnet, daß dieses einen Zuschlagstoff umfaßt.

41. Kulturriegel nach Anspruch 40, dadurch gekennzeichnet, daß der Zuschlagstoff ein substratbelüftender Stoff ist.

42. Kulturriegel nach Anspruch 40 oder 41, dadurch gekennzeichnet, daß der Zuschlagstoff ein substratvolumenstabilisierender Stoff ist.

43. Kulturriegel nach einem der Ansprüche 40 bis 42, dadurch gekennzeichnet, daß der Zuschlagstoff ein wasserspeichernder Zuschlagstoff ist.

44. Kulturriegel nach einem der Ansprüche 40 bis 43, dadurch gekennzeichnet, daß der Zuschlagstoff ein Ionenaustauscheigenschaften aufweisender Zuschlagstoff ist.

**45.** Kulturriegel nach einem der Ansprüche 37 bis 44, dadurch gekennzeichnet, daß das Substrat einen Pflanzennährstoffträger umfaßt.

**46.** Kulturriegel nach einem der Ansprüche 37 bis 45, dadurch gekennzeichnet, daß das Substrat einen Spurennährstoffträger umfaßt.

**47.** Verfahren zum Herstellen eines Kulturriegels für im wesentlichen erdlose Hydrokulturen, dadurch gekennzeichnet, daß in einem ersten Schritt das Basismaterial gemäß den Ansprüchen 16 bis 35 hergestellt wird.

**48.** Verfahren nach Anspruch 47, dadurch gekennzeichnet, daß zu dem Basismaterial ein Zuschlagstoff entsprechend einem oder mehreren der Ansprüche 40 bis 44 zugegeben wird.

**49.** Verfahren nach Anspruch 47 oder 48, dadurch gekennzeichnet, daß zu dem Basismaterial ein Pflanzennährstoffträger zugegeben wird.

**50.** Verfahren nach einem der Ansprüche 47 bis 49, dadurch gekennzeichnet, daß zu dem Basismaterial ein Spurennährstoffträger zugegeben wird.

**51.** Verfahren nach einem der Ansprüche 49 oder 50, dadurch gekennzeichnet, daß das Material auf seiner Oberfläche mit einem Pflanzennährstoffträger und/oder einem Spurennährstoffträger versehen ist und daß durch Zugabe des Pflanzennährstoffträgers und/oder des Spurennährstoffträgers zu dem Basismaterial eine Anpassung an eine spezielle Verwendung des Kultursubstrats für spezielle Pflanzen durchgeführt wird.

**52.** Kulturriegel für im wesentlichen erdlose Hydrokulturen, umfassend ein blockförmig in einer Umhüllung abgepacktes Substrat, dadurch gekennzeichnet, daß das Substrat einen Anteil von mechanisch zerfaserten unvertorften Pflanzenfasern von mehr als 1O Vol.% umfaßt.

**53.** Kulturriegel nach Anspruch 52, dadurch gekennzeichnet, daß der Anteil der mechanisch zerfaserten unvertorften Pflanzenfasern mehr als 30 Vol.% beträgt.

**54.** Kulturriegel nach Anspruch 53, dadurch gekennzeichnet, daß der Anteil der mechanisch zerfaserten unvertorften Pflanzenfasern mehr als 50 Vol.% beträgt.

**55.** Kulturriegel nach einem der Ansprüche 52 bis 54, dadurch gekennzeichnet, daß dieses pflanzenwachstumsverbessernde Substanzen nach einem der Ansprüche 5 bis 15 umfaßt.

**56.** Kulturriegel nach einem der Ansprüche 52 bis 55, dadurch gekennzeichnet, daß das Substrat Zuschlagstoffe nach einem der Ansprüche 40 bis 44 umfaßt.

**57.** Verfahren zur Herstellung des Kulturriegel nach einem der Ansprüche 52 bis 56, dadurch gekennzeichnet, daß die Pflanzenfasern durch mechanische Auffaserung von unvertorftem Pflanzenmaterial hergestellt werden.

**58.** Verfahren nach Anspruch 57, dadurch gekennzeichnet, daß das Pflanzenmaterial durch Einwirkung von Scherkräften bei einer Temperatur von mehr als 60° C mechanisch zu unvertorften Pflanzenfasern aufgefasert wird.

**59.** Verfahren nach Anspruch 58, dadurch gekennzeichnet, daß das Pflanzenmaterial in einer Extrudermaschine zu Pflanzenfasern mechanisch aufgefasert wird.

**60.** Verfahren nach einem der Ansprüche 57 bis 59, dadurch gekennzeichnet, daß pflanzenwachstumsverbessernde Substanzen vor der mechanischen Auffaserung des Pflanzenmaterials zu den Pflanzenfasern zugegeben werden.

**61.** Verfahren nach einem der Ansprüche 57 bis 60, dadurch gekennzeichnet, daß pflanzenwachstumsverbessernde Substanzen nach der mechanischen Auffaserung des Pflanzenmaterials zu Pflanzenfasern zugegeben werden.

**62.** Verfahren nach einem der Ansprüche 57 bis 61, dadurch gekennzeichnet, daß pflanzenwachstumsverbessernde Substanzen in flüssiger Form zugegeben werden.

**63.** Verfahren nach einem der Ansprüche 57 bis 62, dadurch gekennzeichnet, daß pflanzenwachstumsverbessernde Substanzen in fester Form zugegeben werden.

**64.** Kulturriegel nach einem der voranstehenden Ansprüche, dadurch gekennzeichnet, daß das Substrat mit wasserunlöslichen pflanzenwachstumsverbessernden Substanzen versehene Pflanzenfasern aufweist.

**65.** Kulturriegel nach einem der voranstehenden Ansprüche, dadurch gekennzeichnet, daß das Substrat auf konventionelle Nährlösungen für Hydrokulturen im wesentlichen substanzaustauschneutral reagiert.

**66.** Kulturriegel nach Anspruch 65, dadurch gekennzeichnet, daß das Substrat auf konventionelle Nährlösung für Hydrokulturen im wesentlichen stickstoffaufnahmeneutral reagiert.

**67.** Kulturriegel nach einem der voranstehenden Ansprüche, dadurch gekennzeichnet, daß die Hydrokultur eine Sackkultur mit automatischer Tropfbewässerung ist.

**68.** Kulturriegel nach Anspruch 67, dadurch gekennzeichnet, daß die automatische Tropfbewässerung im offenen oder geschlossenen System erfolgt.

**69.** Kulturriegel nach einem der voranstehenden Ansprüche, dadurch gekennzeichnet, daß die Umhüllung eine Folienverpackung ist.

**70.** Kulturriegel nach einem der voranstehenden Ansprüche, dadurch gekennzeichnet, daß der Kulturriegel in einen allseits geschlossenen Foliensack als Umhüllung abgepackt ist.

**71.** Kulturriegel nach einem der Ansprüche 1 bis 20, dadurch gekennzeichnet, daß der Kulturriegel in einer mit Öffnungen versehenen Umhüllung abgepackt ist.

**72.** Kulturriegel nach einem der voranstehenden Ansprüche, dadurch gekennzeichnet, daß dieser block- oder schlauch- oder zylinder- oder kegelförmig ausgebildet ist.

**73.** Kulturriegel für im wesentlichen erdlose Hydrokulturen, umfassend ein in einer Umhüllung abgepacktes Substrat, dadurch gekennzeichnet, daß das Substrat nach seiner Verwendung in der Hydrokultur kompostierbar ist.

**74.** Kulturriegel für im wesentlichen erdlose Hydrokulturen, umfassend ein in einer Umhüllung abgepacktes Substrat, dadurch gekennzeichnet, daß das Substrat nach seiner Verwendung in der Hydrokultur als Bodenverbesserer für Erdkulturen verwendbar ist.

**75.** Kulturriegel nach Anspruch 74 oder 75, dadurch gekennzeichnet, daß dieser die Merkmale von einem oder mehreren der Ansprüche 1 bis 72 aufweist.

**76.** Kulturriegel nach einem der voranstehenden Ansprüche dadurch gekennzeichnet, daß die Umhüllung aus einem biologisch abbaubaren Material hergestellt ist.

FIG. 1

FIG. 2

FIG. 3

FIG. 4

**FIG. 5**

**FIG. 6**

Europäisches
Patentamt

EUROPÄISCHER RECHERCHENBERICHT

Nummer der Anmeldung

EP    92 10 4428
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | GB-A-2 145 706 (HILLIER NURSERIES) | 1,6,7, 9-11,16, 22,28, 29-31, 34,36, 38-44 | A01G31/00 |
|  | * Ansprüche 1,4,6,7,10 * | 47-49, 53-57, 61-63, 67-75 | |
| A | * Seite 1, Zeile 28 - Zeile 64 * | 8,37,62, 64,65,66 | |
|  | --- | | |
| Y | WO-A-8 703 168 (BEGHIN SAY SA) | 1,6,7,9, 10,11, 16,22, 28-31, 34,36, 38-44 | |
|  | * Ansprüche 1,4,7-9,11-14 * | 47-49, 53-57, 61-63, 67-75 | RECHERCHIERTE SACHGEBIETE (Int. Cl.5 ) |
|  | * Seite 2, Absatz 3 - Seite 3, Absatz 3 * * Seite 5, Absatz 4 * | | A01G C05F |
|  | --- | | |
| A | EP-A-0 409 186 (TAKEDA GARDEN PRODUCTS, CO.) | 1,5-11, 14-16, 19, 21-23, 25,26, 28-31, 34-45 | |
|  | * Ansprüche 1-3,5,6 * | 47-49, 51-57, 61-66, 69-72 | |
|  | * Seite 3, Zeile 5 - Zeile 21 * * Seite 4, Zeile 16 - Zeile 27 * | | |
|  | --- | | |

Der vorliegende Recherchenbericht wurde für alle Patentansprüche erstellt

| Recherchenort | Abschlußdatum der Recherche | Prüfer |
|---|---|---|
| DEN HAAG | 02 JUNI 1992 | RODRIGUEZ FONTAO M.B |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 224 990 (KUWAIT INSTITUTE FOR SCIENTIFIC RESEARCH) <br> * Ansprüche 1-4,7,11,12 * <br> --- | 64-75 | |
| P,A | WO-A-9 114 358 (INSTITUT FÜR UMWELTPFLEGE AG.) <br><br><br><br> * Ansprüche 1-9,15-18 * <br> * Seite 7, Zeile 28 - Seite 8, Zeile 17 * <br><br> ----- | 1-4,6, 8-14, 16-18, 20-2628- 60,62-72 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 02 JUNI 1992 | RODRIGUEZ FONTAO M.B |